# EUROPEAN PATENT APPLICATION

(11) **EP 4 580 175 A1**
(43) Date of publication of application: **02.07.2025**
(21) Application number: 24217185.8
(22) Date of filing: 03.12.2024
(51) Int. Cl.: H04N 7/18, B64U 70/00, B64U 70/90

(54) **SECURITY CAMERA WITH A DRONE LANDING PAD**

(30) Priority: 28.12.2023 IN 202311089528; 21.02.2024 US 202418583835
(71) Applicant: Honeywell International Inc., Charlotte, NC 28202 (US)
(72) Inventor: CHAURASIA, Jitendra S., Charlotte, 28202 (US); ESWARA, Lalitha M., Charlotte, 28202 (US); BHATTACHARJEE, Arnab, Charlotte, 28202 (US); DATTA, Indranil, Charlotte, 28202 (US)
(74) Representative: Haseltine Lake Kempner LLP

(57) **Abstract**

A security camera includes a video camera, one or more power ports and one or more data ports. At least one of the power ports receives power to power the video camera. At least one of the data ports transmits the video streams captured by the video camera onto a network. The security camera includes an in-built drone landing pad that has a drone power port and a drone data port. The drone power port can provide power to the drone and the drone data port can receive video data from the drone when the drone lands on the landing pad of the security camera.

## Description

### RELATED APPLICATIONS

This application claims the benefit of Indian Provisional Patent Application No. 202311089528, filed December 28, 2023, which application is incorporated by reference herein.

### TECHNICAL FIELD

The present disclosure relates generally to video surveillance systems and more particularly to drone-based video surveillance systems.

### BACKGROUND

A number of video surveillance systems employ fixed video cameras that are physically mounted at desired positions in the field with wired power and data communication capabilities. In some cases, such fixed video cameras include pan, tilt and/or zoom capabilities that can be used to adjust their field of view (FOV). Some video surveillance systems also employ mobile video cameras such as video cameras that are attached to drones. Drones are able to fly essentially anywhere in order to place a video camera at a desired location, for example. Drones are battery-powered, and as such may run low on battery power before completing their commanded flight, which may include the drone flying to a desired location that is not adequately covered by the fixed video cameras, remaining at the desired location for a period of time to observe and capture a video stream showing an event, and then returning to its original location. While drones are often able to communicate wirelessly, such as via WiFi or cellular networks (e.g. 4G, 5G), the drones may fly through regions in which these communication protocols are not effective or available. What would be desirable are methods and systems that allow a drone to land on a fixed security camera in order to allow the drone battery to be recharged using power from the fixed security camera and/or to download data such as a video stream captured by the drone to a network via the data communication capabilities of the fixed video camera.

### SUMMARY

The present disclosure relates generally to video surveillance systems and more particularly to drone-based video surveillance systems. An example may be found in a fixed security camera. The illustrative security camera includes a housing that houses a video camera for capturing one or more video streams, one or more power ports and one or more data ports. At least one of the one or more power ports receives power to power the video camera. At least one of the one or more data ports transmits one or more of the video streams captured by the video camera onto a network. A drone landing pad is supported by the housing of the video camera and includes a drone power port and a drone data port. The drone power port is operatively coupled to the security camera for receiving power from the security camera and is configured to operatively connect to a power port of a drone to recharge a power source of the drone using power from the security camera when the drone lands on the drone landing pad of the security camera. The drone data port is operatively coupled to the security camera and is configured to operatively connect to a data port of the drone when the drone lands on the drone landing pad and is configured to transfer drone data from the drone to the security camera.

Another example may be found in a method for operating a drone. The method includes identifying a location of a fixed security camera, wherein the security camera includes a drone landing pad that includes a drone power port for providing power to the drone from the security camera and a drone data port for receiving drone data from the drone. The drone is landed on the drone landing pad such that the drone is connected to the drone power port and the drone data port of the drone landing pad. With the drone landed on the drone landing pad, a power source of the drone is recharged via the drone power port and drone data is transferred from the drone to the security camera via the drone data port. The drone is flown from the drone landing pad.

Another example may be found in a system. The illustrative system includes a drone and a fixed security camera. The drone includes a power source, a power port and a data port. The security camera includes a housing that houses a video camera for capturing one or more video streams, one or more power ports and one or more data ports. At least one of the one or more power ports receives power to power the video camera. At least one of the one or more data ports transmits one or more of the video streams captured by the video camera onto a network. A drone landing pad includes a drone power port. The drone power port is operatively coupled to the security camera for receiving power from the security camera and is configured to operatively connect to a power port of a drone to recharge a power source of the drone using power from the security camera when the drone lands on the drone landing pad of the security camera.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative video surveillance system;
Figure 2 is a schematic block diagram showing an illustrative security camera that may be part of the illustrative video surveillance system of Figure 1;
Figure 3 is a schematic block diagram showing an illustrative drone that may be part of the illustrative video surveillance system of Figure 1;
Figure 4 is a schematic diagram showing a landing pad that may be part of the illustrative security camera of Figure 2;
Figure 5 is a flow diagram showing an illustrative method for operating a drone such as illustrative drone shown in Figure 3;
Figure 6 is a flow diagram showing an illustrative method; and
Figure 7 is a schematic drawing showing features of the illustrative security camera shown in Figure 2.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

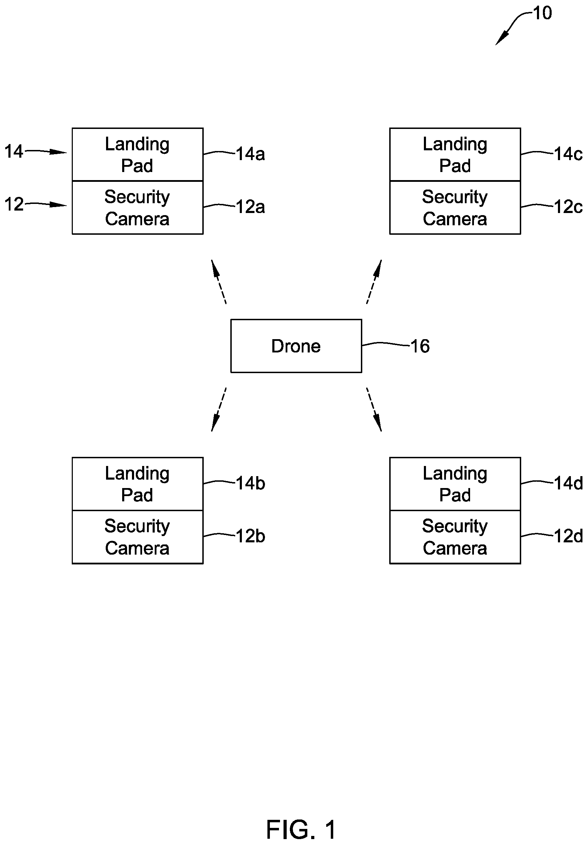

Figure 1 is a schematic block diagram showing an illustrative video surveillance system 10. The illustrative video surveillance system 10 includes a number of fixed security cameras 12, individually labeled as 12a, 12b, 12c and 12d. While a total of four security cameras 12 are shown, this is merely illustrative as the video surveillance system 10 may include any number of security cameras 12 and in some instances may include substantially more than four security cameras 12. The number of fixed security cameras 12 are physically mounted at desired positions in the field and may include wired power and wired data communication capabilities. In some cases, the number of fixed security cameras 12 may include wired power and wireless data communication capabilities. In some cases, some or all of the fixed video cameras 12 include pan, tilt and/or zoom capabilities that can be used to adjust their field of view (FOV).

As shown, the fixed security cameras 12 each include a landing pad 14, individually labeled as 14a, 14b, 14c and 14d. As shown, each fixed security camera 12 has a landing pad 14. In some instances, the video surveillance system 10 may include a large number of fixed security cameras 12, some of the fixed security cameras 12 including a landing pad 14 and some of the fixed security cameras 12 not including a landing pad 14. While not shown, each of the fixed security cameras 12 may be operably coupled with a monitoring station that receives video clips and/or video streams from each of the security cameras 12.

The illustrative video surveillance system 10 may include one or more drones 16, although only a single drone 16 is shown. In some instances, the drone 16 may be configured to augment the surveillance capabilities of the video surveillance system 10 by including a video camera. The drone 16 may be instructed to fly to a particular location in order to capture a video clip of a suspected or possible event, for example. In some instances, the drone 16 may be commanded to fly to a particular location to capture video of an area that is outside the field of view of any of the fixed security cameras 12. In some instances, the drone 16 may be commanded to fly to a particular location to provide additional video surveillance capability even if there are one or more fixed security cameras 12 in the vicinity of the particular location.

In some instances, the drone 16 may not have sufficient power reserves to complete its commanded flight, which may include the drone 16 flying to a desired location, remaining at the desired location for a period of time to observe and capture a video stream showing an event, and then returning to its original location. The original location may be a charging or docking station, for example. In some instances, the original location may not be a fixed spot, but may instead be a default flight pattern that the drone 16 defaults to when not otherwise commanded. It will be appreciated that because the drone 16 is battery-powered, the drone 16 may periodically need additional power. In some instances, the landing pads 14 of the fixed security cameras 12 may provide additional physical landing zones for the drone 16. In some instances, as will be discussed, the drone 16 may be able to recharge its on-board battery using electrical power provided by the landing pads 14. In some instances, as will be discussed, the drone 16 may be able to download data such as but not limited to a video stream or video clip to the corresponding security camera 12. In some instances, the security camera 12 may store the video stream or video clip. In some instances, the security camera 12 may transmit the video stream or video clip to a recording device and/or operator console via its own in-build networking capabilities.

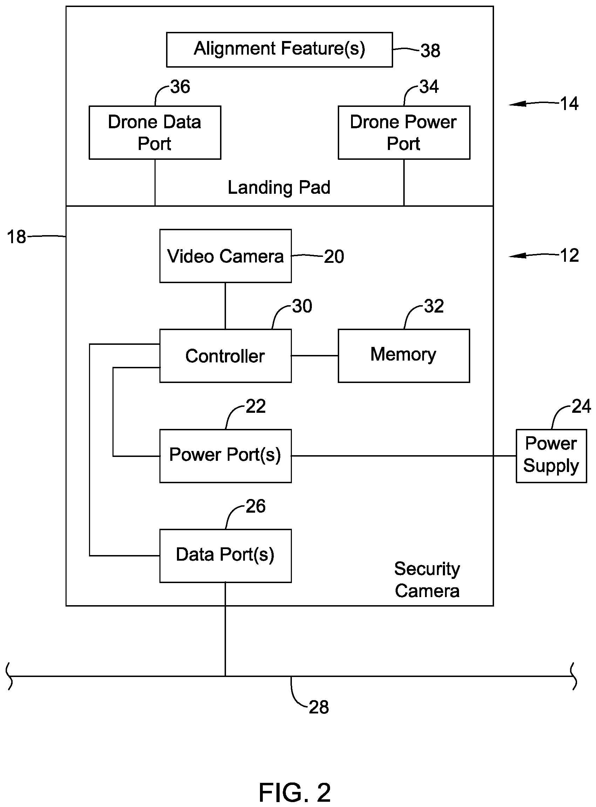

Figure 2 is a schematic block diagram showing features of a security camera 12 and corresponding landing pad 14. The illustrative security camera 12 includes a housing 18 that provides an enclosure for the security camera 12 and houses and protects the internal components of the security camera 12. The housing 18 also serves to support the landing pad 14. One of the internal components housed by the housing 18 is a video camera 20 that is configured to capture one or more video streams. In some cases, the video camera 20 includes pan, tilt and/or zoom capabilities that can be used to adjust the field of view (FOV) of the video camera 20. Another of the internal components housed by the housing 18 includes one or more power ports 22 that are configured to receive power for powering the security camera 12 including the video camera 20. In some instances, at least one of the one or more power ports 22 may receive electrical power from a power supply 24. The power supply 24 may be operably coupled with a facility power supply, for example. The power supply 24 may be operably coupled with a municipal power supply. The housing 18 also houses one or more data ports 26. At least one of the one or more data ports 26 may be configured to transmit video streams that are captured by the video camera 20 of the security camera 12 to a network 28. In some instances, the network 28 may represent a wired or wireless facility network. In some instances, the network 28 may represent a wired or wireless municipal network, for example.

The housing 18 also houses a controller 30 that is configured to control operation of the security camera 12. In some instances, the controller 30 may control operation of the power port(s) 22 in providing power to the landing pad 14. In some instances, the controller 30 may control operation of the data port(s) 26 in receiving video streams and possibly other data from the drone 16 (via the landing pad 14) as well as uploading the video streams and possibly other data from the drone 16 to the network 28. A memory 32 is operably coupled to the controller 30. In some instances, the memory 32 may be configured for storing video streams from the video camera 20. The memory 32 may be configured for storing video streams and possibly other data from the drone 16. In some cases, the video streams stored in the memory 32 may be uploaded to the network 28 immediately, periodically, upon request, or at any other suitable time. In some cases, the controller 30 of the security camera 12 may execute an ONVIF/RTSP client that connects to an ONVIF/RTSP server running on the drone 16 via the drone landing pad 14. The ONVIF/RTSP client of the security camera 12 may start getting the streams from the ONVIF/RTSP server of the drone 16 via the drone data port 36 after the drone lands on the drone landing pad 14. The security camera 12 can then add the received drone video stream as an additional stream in the memory 32 of the security camera 12, and may send the drone video stream (along with video streams from the video camera 20 of the security camera 12) to an RTSP client hosted on a Network Video Recorder (NVR) on the network 28.

In the example shown, the landing pad 14 is supported by the housing 18 of the security camera 12. The landing pad 14 includes a drone power port 34 that is operatively coupled to the security camera 12 for receiving power from the security camera 12. The drone power port 34 is configured to operatively connect to a power port of the drone 16 to recharge a power source of the drone 16 using power from the security camera 12 when the drone 16 lands on the drone landing pad 14 of the security camera 12. In some cases, the landing pad 14 includes a drone data port 36 that is operatively coupled to the security camera 12. The drone data port 36 is configured to operatively connect to a data port of the drone 16 when the drone 16 lands on the drone landing pad 14 and is configured to transfer drone data from the drone 16 to the security camera 12. In some instances, the drone data may include one or more video streams captured by a camera of the drone, and in some cases other drone data such as done information (e.g. drone ID, drone battery capacity, drone range, drone CPU capability, drone memory capacity, drone commanded flight path, drone camera resolution, drone camera frame rate, drone temperature(s), drone remaining battery charge, drone processor utilization history, drone memory utilization history, drone fault logs, etc.).

In some instances, the drone data from the drone 16 and the one or more video streams captured by the video camera 20 may be transmitted to the network 28 through a common data port of the security camera 12. The common data port, which may be one of the one or more data ports 26, may include a common Power Over Ethernet (POE) port of the security camera 12. In some instances, the power used to power the security camera 12 and the power delivered to the drone 16 via the drone power port 34 of the drone landing pad 14 are provided by a common power port that is the common Power Over Ethernet (POE) port of the security camera 12. In other words, the common POE port may function as both data port and power port for both the security camera 12 and the landed drone 16.

In some instances, the drone data from the drone 16 and the one or more video streams captured by the video camera 20 may be transmitted to the network 28 through different data ports 26 of the security camera 12. In some instances, the different data ports may include different Power Over Ethernet (POE) ports of the security camera 12. In some cases, a network switch (not shown) may be provided in the security camera 12 that switches between the different data ports of the different Power Over Ethernet (POE) ports of the security camera 12. In some instances, the power used to power the security camera 12 and the power delivered to the drone 16 via the drone power port 34 of the drone landing pad 14 are provided by different power ports of the security camera, wherein the different power ports each include the different Power Over Ethernet (POE) ports of the security camera, but this is not required.

In some instances, the drone data received by the security camera 12 via the drone data port 36 may be stored in the memory 32 of the security camera 12, and may subsequently be transmitted to the network 28 via one or more data ports 26 of the security camera 12 upon request from the network 28. In some instances, the drone data may be streamed directly from the drone 16 to the network 28 through the drone data port 36 and one or more data ports 26 of the security camera 12.

In some instances, the drone landing pad 14 may include one or more alignment features 38 that help guide the drone 16 when the drone 16 is landing on the drone landing pad 14 of the security camera 12. In some instances, the one or more alignment features 38 may include one or more visual alignment features that a camera of the drone 16 may use to align the drone 16 with the drone landing pad 14. For example, the visual alignment features may include a square or other shape disposed on an upper surface of the landing pad 14. In some instances, the one or more alignment features 38 may include one or more magnets that may be detected by magnetic sensors in the drone 16. In some cases, the one or more magnets in the security camera 12 may be electromagnetics that can be selectively energized and de-energized by the security camera 12. In some cases, the electromagnets may be de-energized once the drone 16 has successfully landed on the drone landing pad 14 to reduce electromagnetic noise. In some cases, the electromagnets may remain energized after the drone 16 has successfully landed on the drone landing pad 14 to attract corresponding magnetic material on the drone 16 to help hold the drone 16 in position on the drone landing pad 14. In some cases, the one or more alignment features 38 may include one or more LED lights that a camera of the drone 16 may identify and use to align the drone 16 with the drone landing pad 14. In some cases, the one or more alignment features 38 may include one or more beacon signals (e.g. BLE beacon signals) that the drone 16 can identify and use to guide the drone to the drone landing pad 14. In some cases, the drone 16 may use a combination of one or more alignment features 38 to guide the drone to the security camera 12 and align the drone 16 with the drone landing pad 14.

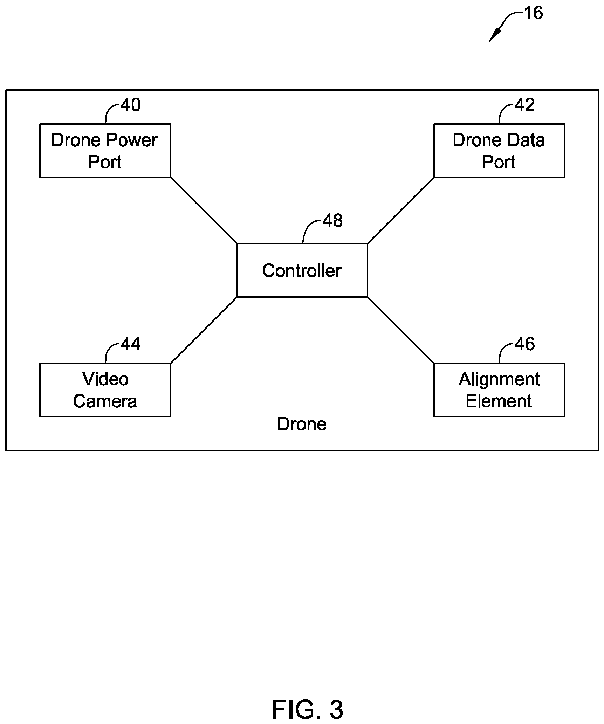

Figure 3 is a schematic block diagram showing additional features of the drone 16. The drone 16 may include a drone power port 40 that is configured to receive power from the drone power port 34 on the landing pad 14 when the drone 16 is docked and resting on the landing pad 14. The drone 16 may include a drone data port 42 that is configured to transmit and/or receive data via the drone data port 36 of the landing pad 14 when the drone 16 is docked and resting on the landing pad 14. The illustrative drone 16 includes a video camera 44 that may be used to capture video streams of events occurring under the drone 16 while the drone 16 flies or hovers above the event. The drone may also include additional sensors such as one or more gas sensors, one or more temperature sensors, one or more humidity sensors, one or more radiation sensors, one or more microphones, one or more location tracking sensors (e.g. GPS) and/or any other suitable sensor or sensor combination. The drone 16 includes an alignment element 46 that may be configured to coordinate with the alignment features 38 (Figure 2) in aligning the drone 16 with the landing pad 14.

When the alignment features 38 include visual alignment features, the alignment element 46 may be a camera that is configured to detect the visual alignment features. When the alignment features 38 include magnets, the alignment element 46 may include magnetic sensors and/or a material that is reactive to the magnets. This may include a ferrous material such as iron or steel, or may include one or more additional magnets. In some instances, the magnet(s) forming the alignment features 38 and/or the magnet(s) forming the alignment element 46 may include natural magnets. In some instances, the magnet(s) forming the alignment features 38 and/or the magnet(s) forming the alignment element 46 may include electromagnets that are only actuated when it is desired to guide the drone 16 into position on the landing pad 14.

The illustrative drone 16 includes a controller 48 that is configured to control operation of the drone 16. This may include planning and coordinating flight activities of the drone 16. This may include determining whether the drone 16 has sufficient power reserves to complete its commanded mission or whether recharging may be necessary. The controller 48 may oversee recharging when the drone 16 is disposed on the landing pad 14. The controller 48 may oversee data transfer when the drone 16 is disposed on the landing pad 14.

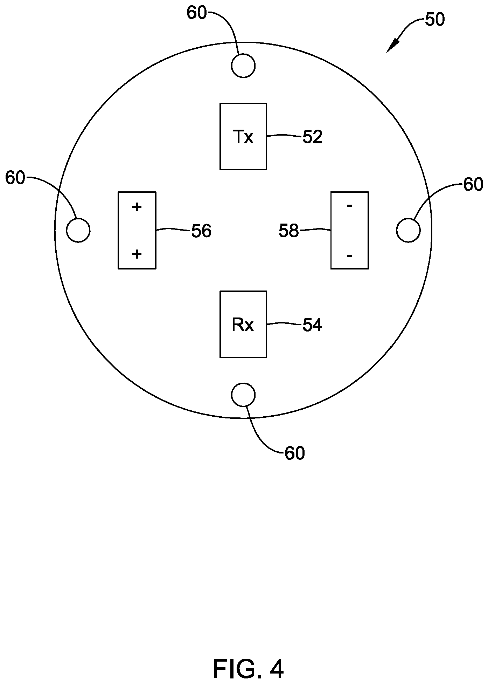

Figure 4 is a schematic diagram showing an illustrative landing pad 50 supported on a housing of a security camera 12. The illustrative landing pad 50 may be considered as an example of the landing pad 14. While the landing pad 50 is shown as having a circular shape, this is merely illustrative. In some instances, the landing pad 50 may have a rectilinear shape, an ovoid shape, or any other shape as desired. In some instances, the shape of the landing pad 50 functions as the alignment features 38, as the shape itself serves as a visual alignment feature.

In some instances, the landing pad 50 may be a flat surface that bears several conductive elements that may be contacted by corresponding conductive elements disposed on an underside, or perhaps on a landing foot, of the drone 16. As shown, the landing pad 50 includes a Tx plate 52 that is configured to permit transmission through the Tx plate 52. The landing pad 50 includes an Rx plate 54 that is configured to permit receiving data through the Rx plate 54. Together, the Tx plate 52 and the Rx plate 54 function as the drone data port 36, allowing data to be transmitted between the landing pad 50 to the drone data port 42. The landing pad 50 includes a positively charged conductive plate 56 and a negatively charged conductive plate 58 that together function as the drone power port 34, allowing power to be transmitted from the landing pad 50 to the drone power port 40. In some instances, each of the Tx plate 52, the Rx plate 54, the positively charged conductive plate 56 and the negatively charged conductive plate 58 may be operably coupled with a POE port, sometimes through controller 48.

The illustrative landing pad 50 includes several magnets 60 that function as the alignment features 38. While a total of four magnets 60 are shown, this is merely illustrative. The landing pad 50 may include only two magnets 60, only three magnets 60, or may include five or more magnets 60. In some instances, the pattern in which the magnets 60 are laid out may vary, depending on the overall shape of the landing pad 50. As an example, a square landing pad 50 may have four magnets 60, with each magnet 60 disposed within one of the four corners of the square landing pad 50. A triangular landing pad 50 may have a total of three magnets 60, with each magnet 60 disposed in an apex of the triangular landing pad 50. In some cases, the pattern of the magnets (and/or other alignment feature) may uniquely identify the orientation of the Tx plate 52, the Rx plate 54, the positively charged conductive plate 56 and the negatively charged conductive plate 58 of the landing pad 50 so that the drone can properly orient its drone ports to match when landing. In some cases, the magnets may attract corresponding magnetic material on the drone to help hold the drone in position when the drone is landed on the landing pad 50.

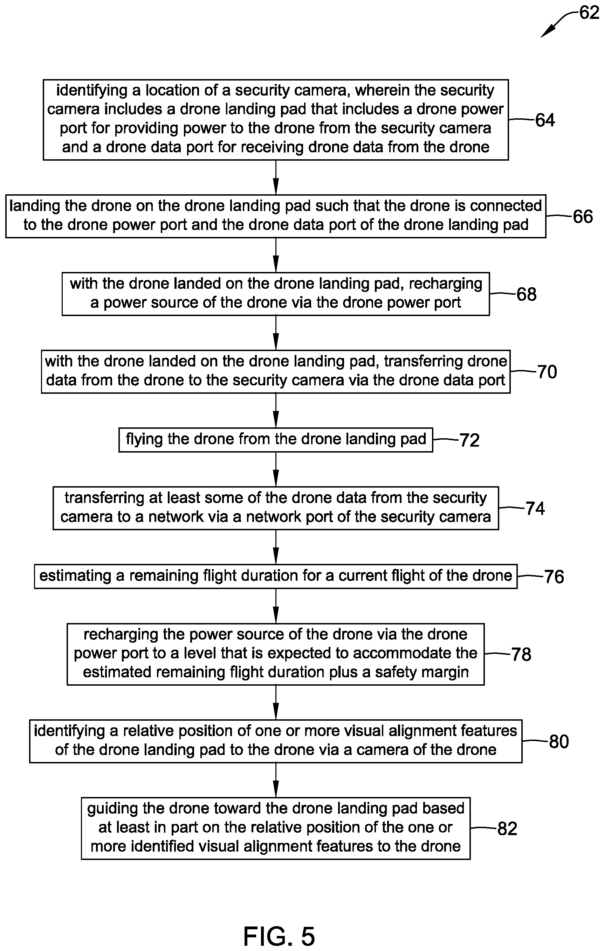

Figure 5 is a flow diagram showing an illustrative method 62 for operating a drone (such as the drone 16). The illustrative method 62 includes identifying a location of a security camera (such as the security camera 12) that includes a drone landing pad (such as the landing pad 14) that includes a drone power port (such as the drone power port 34) for providing power to the drone from the security camera and/or a drone data port (such as the drone data port 36) for receiving drone data from the drone, as indicated at block 64. The drone is landed on the drone landing pad such that the drone is connected to the drone power port and/or the drone data port of the drone landing pad, as indicated at block 66. With the drone landed on the drone landing pad, a power source of the drone is recharged via the drone power port of the drone landing pad, as indicated at block 68. With the drone landed on the drone landing pad, drone data may be transferred from the drone to the security camera via the drone data port, as indicated at block 70. The drone is flown from the drone landing pad, as indicated at block 72.

In some instances, the method 62 may include transferring at least some of the drone data from the security camera to a network via a network port of the security camera, as indicated at block 74. In some instances, the method 62 may include estimating a remaining flight duration for a current commanded flight of the drone, as indicated at block 76. The power source of the drone may be recharged via the drone power port to a level that is expected to accommodate the estimated remaining flight duration plus a safety margin, as indicated at block 78. In some instances, when the drone includes a camera, the method 62 may include identifying a relative position of one or more visual alignment features of the drone landing pad to the drone via the camera of the drone, as indicated at block 80. The drone may be guided toward the drone landing pad based at least in part on the relative position of the one or more identified visual alignment features to the drone, as indicated at block 82.

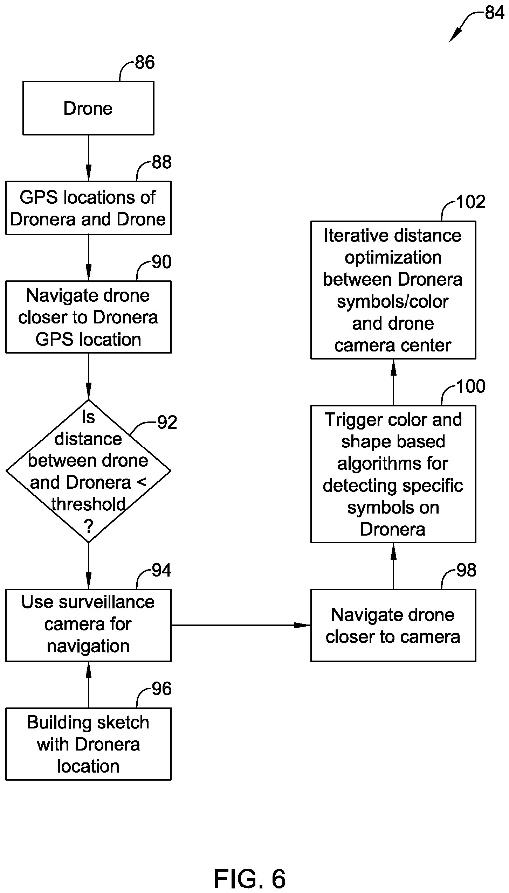

Figure 6 is a flow diagram showing an illustrative method 84 for a drone to locate a suitable security camera that the drone can fly to for recharging and/or data transmission. A drone is shown at block 86. The drone is programmed with the GPS location of each of the security cameras with a drone landing pad, named Dronera^{®}, as indicated at block 88. The drone navigates towards a GPS location of a desired security camera, as indicated at block 90. A determination is made as to whether a distance between the drone and the security camera is less than a threshold distance, as indicated at decision block 92. If so, a surveillance camera of the drone is used for navigation to the security camera, as indicated at block 94.

In some instances, the locations of security cameras with a drone landing pad within a facility are provided to the drone, as indicated at block 96. The drone navigates closer to a desired security camera, as indicated at block 98. An algorithm within the drone is activated that informs the drone as to the specific markings for a particular camera that the drone is looking for, as indicated at block 100. The drone performs an iterative distance optimization procedure to locate and land the drone on the landing pad of the desired security camera, as indicated at block 102.

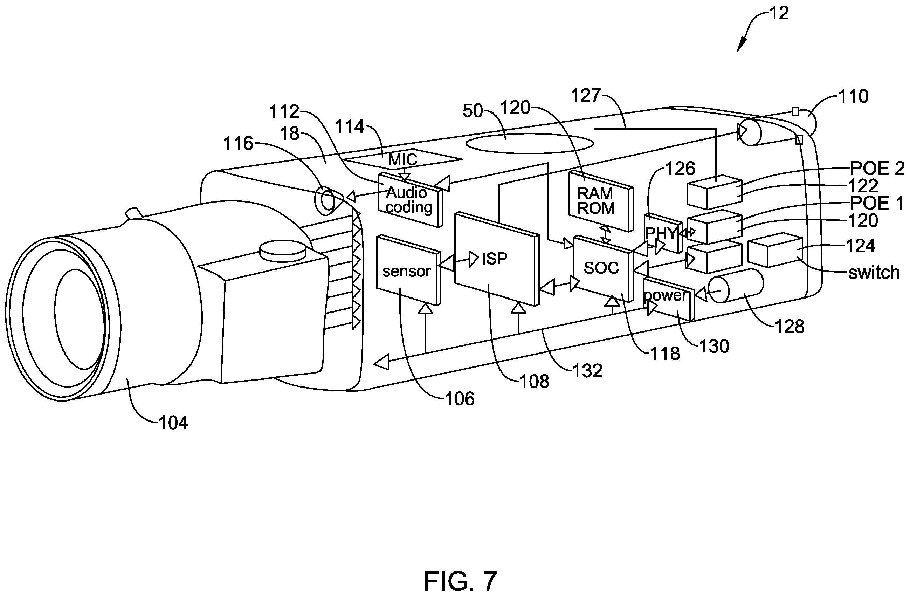

Figure 7 is a schematic diagram of the illustrative security camera 12, showing some of the internal components of the security camera 12. The security camera 12 includes the housing 18. A lens 104 extends from the housing 18. Inside the housing 18, a sensor 106 receives a video signal from the lens 104, and communicates the video signal to an ISP (Image Signal Processing) chip 108. The ISP chip 108 communicates the video signal with a BNC (Bayonet Nut Coupling) connector 110, which is a miniature quick connect/disconnect radio frequency connector. An Audio coding block 112 communicates with a microphone 114 and a speaker 116. An SOC (System On Chip) block 118 communicates with the ISP chip 108, a memory block 120 that includes RAM (Random Access Memory) such as DDR (Double Data Rate) memory and/or ROM (Read Only Memory) such as Flash memory, and the Audio coding block 112. The security camera 12 includes a POE1 (Power Over Ethernet) block 120 and a POE2 block 122 and a POE switch 124 that switches between the POE1 block 120 and the POE2 block 122. The POE1 block 120 communicates with an Ethernet PHY 126, which is an ethernet physical layer. The POE2 block 122 communicates with a port 127 schematically shown as extending to an upper surface of the housing 18, proximate the landing pad 50. A power connector 128 is operably coupled with a Power block 130, which in turn is operably coupled with a power bus that provides electrical power to all of the components within the security camera 12.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A security camera comprising:
a housing for housing:
a video camera for capturing one or more video streams;
one or more power ports, at least one of the one or more power ports for receiving power to power the video camera;
one or more data ports, at least one of the one or more data ports for transmitting one or more of the video streams captured by the video camera onto a network;
a drone landing pad supported by the housing, the drone landing pad including: a drone power port operatively coupled to the security camera for receiving power from the security camera, the drone power port configured to operatively connect to a power port of a drone to recharge a power source of the drone using power from the security camera when
the drone lands on the drone landing pad of the security camera; and
a drone data port operatively coupled to the security camera, the drone data port configured to operatively connect to a data port of the drone when the drone lands on the drone landing pad and is configured to transfer drone data from the drone to the security camera.

2. The security camera of claim 1, wherein the drone data comprises one or more video streams captured by a camera of the drone.

3. The security camera of claim 1, wherein the drone data from the drone and the one or more video streams captured by the video camera are transmitted to the network through a common data port of the security camera.

4. The security camera of claim 3, wherein the common data port comprises a common Power Over Ethernet (POE) port of the security camera.

5. The security camera of claim 4, wherein the power used to power the security camera and the power delivered to the drone via the drone power port of the drone landing pad are provided by a common power port, wherein the common power port comprises the common Power Over Ethernet (POE) port of the security camera.

6. The security camera of claim 1, wherein the drone data from the drone and the one or more video streams captured by the video camera are transmitted to the network through different data ports of the security camera.

7. The security camera of claim 6, wherein the different data ports comprise different Power Over Ethernet (POE) ports of the security camera.

8. The security camera of claim 7, wherein the power used to power the security camera and the power delivered to the drone via the drone power port of the drone landing pad are provided by different power ports of the security camera, wherein the different power ports comprise the different Power Over Ethernet (POE) ports of the security camera.

9. The security camera of claim 1, wherein the drone data received by the security camera via the drone data port is stored in a memory of the security camera, and is subsequently transmitted to the network via one or more data ports of the security camera upon request from the network.

10. The security camera of claim 1, wherein the drone data is streamed directly from the drone to the network through the drone data port and one or more data ports of the security camera.

11. The security camera of claim 1, wherein the drone landing pad includes one or more alignment features to help guide the drone when landing on the drone landing pad of the security camera.

12. The security camera of claim 11, wherein the one or more alignment features include one or more visual alignment features that a camera of the done uses to align the drone with the drone landing pad.

13. The security camera of claim 11, wherein the one or more alignment features include one or more magnets.

14. A method for operating a drone, the method comprising:
identifying a location of a security camera, wherein the security camera includes a drone landing pad that includes a drone power port for providing power to the drone from the security camera and a drone data port for receiving drone data from the drone;
landing the drone on the drone landing pad such that the drone is connected to the drone power port and the drone data port of the drone landing pad;
with the drone landed on the drone landing pad, recharging a power source of the drone via the drone power port;
with the drone landed on the drone landing pad, transferring drone data from the drone to the security camera via the drone data port; and
flying the drone from the drone landing pad.

15. The method of claim 14, comprising transferring at least some of the drone data from the security camera to a network via a network port of the security camera.
